# EUROPEAN PATENT APPLICATION

(11) **EP 2 367 364 A1**
(43) Date of publication of application: **21.09.2011**
(21) Application number: 10002858.8
(22) Date of filing: 18.03.2010
(51) Int. Cl.: H04R 1/10, H04R 5/033, H04M 1/05, H04M 1/60, H04M 1/02

(54) **Wireless audio headset with an ear-piece**

(71) Applicant: novero GmbH, 40468 Düsseldorf (DE)
(72) Inventor: Schmitz, Uwe, 40229 Düsseldorf (DE); Jansen, Ralf, 45527 Hattingen (DE)
(74) Representative: Gesthuysen, von Rohr & Eggert

(57) **Abstract**

Communication item in the form of a wireless audio headset with an ear-piece (1), wherein a communication module is integrated into the communication item and the communication module comprises at least a core element (7) and a speaker (11). The ear-piece (1) comprises a housing (4) with at least the core element (7) of the communication module positioned in the housing (4) and with the speaker (11) positioned on or in the ear-piece (1). The ear-piece (1) preferably comprises a mechanical fastener (12) like a clip or a pin to secure the ear-piece (1) to the pinna or the ear-lope of a user's ear. The ear-piece (1) further preferably comprises at least one decorative component (3) which is separate from, but mechanically connected to a front side of the housing (4) or is formed directly on the housing (4). In addition to the ear-piece (1) there is a mechanical carrier component in the form of a base (14) with a fastener (15) which can be positioned at an appropriate location on a user's body or clothing. The housing (4) is provided with a mechanical interface (16) that provides a detachable connection to the base (14). In a rest position of the ear-piece (1) the ear-piece (1) is detachably connected to the base (14) and in a use position the ear-piece (1) is detached from the base (14) and attached to the ear of the user.

## Description

The present invention relates to a communication item in the form of a wireless audio headset with an ear-piece, all with the features according to the preamble of claim 1.

In the prior art forming the starting point of the invention (WO-A1-2008/156693) a battery powered miniature wireless headset is worn as a single ear-ring or two headsets are worn as a pair of ear-rings. The headset communicates with a mobile phone or any other host preferably by a directional wireless communication link allowing hands-free operation. In use the ear-piece is attached to the pinna or the ear-lobe of a user's ear using either a clip or a post inserted through a pinna piercing and secured by a clutch or nut.

The above mentioned prior art extensively explains the general background of wireless headsets and the advantages of wireless headsets over wired headsets.

The prior art explains that ear-ring jewelry is a common item and that convincing techniques have been developed to attach ear-rings to ear-lobes securely and comfortably.

The prior art communication item has a core element of a communication module in a housing of the ear-piece. A speaker forms a part of an ear-plug that extends outwardly from the rear side of the ear-piece. In fact, the ear-plug/speaker is here attached to the housing of the ear-piece by a configurable speaker boom.

A microphone assembly is attached to the housing of the ear-piece by means of an also configurable microphone boom.

The front face of the housing of the ear-piece is designed as a decorative component even in the form of a jewelry component to resemble the look of a traditional ear-ring.

The above mentioned prior art discusses extensively details of the technical construction of such a communication item in the form of an ear-piece of a wireless audio headset. Also all kinds of wireless communication links are explained and discussed. So extensive reference is made to above mentioned prior art also as far as the communication item according to the invention is concerned.

In a further prior art there is provided a single jewelry item in the form of a pendant on a necklace (US 2008/0161023 A1). The pendant has a housing comprising a front cover carrying a decorative component like a pearl and a rear cover connected to the front cover. An ear-plug extends outwardly from the rear surface of the rear cover. The jewelry component on the front cover usually faces away from the bearer while the rear cover with the ear-plug usually faces towards the bearer.

Inside the housing there is a core element of a communication module. The housing has wall openings as access points for functional elements of the core element, i. e. volume control keys, a switch key, and indicating light as well as a power jack.

The necklace carrying the pendant has a first joining member attached to a first end of the necklace and a second joining member attached to the second end of the necklace. The two joining members together form the closure of the necklace. In the necklace a lead wire is disposed connecting the pendant to a microphone disposed in the second joining member of the closure.

The lead wire connects the microphone is connected to the core element inside the housing of the pendant. Likewise, a speaker in the ear-plug on the rear cover of the pendant is electrically connected to the core element.

The necklace has a double function, first to carry the pendant around the neck of the bearer, second to connect the microphone in the closure to the core element.

The core element in the housing of the pendant is part of a communication module to send/receive short-range wireless signals, in particular in the Bluetooth standard.

Such a jewelry item can be worn on the neck naturally if no communication is intended. As the distance between the microphone and the ear-piece and the distance between mouth and ear of the bearer are almost the same, the device can be used for communication easily when the ear-plug on the necklace is inserted into the ear.

The jewelry component on the front cover of the housing can have many different designs. It can be a specific type of surface of the front cover also. Likewise, the necklace can be simple and basic, e.g. a leather string, or can be more sophisticated, e.g. decorated with pearls or other jewelry or costume jewelry elements.

The prior art can be considered to be applicable with all kinds of short-range wireless communication standards (Bluetooth, Wi-Fi, IR etc.), and also with future standards still to be developed (see also Weyers: "Integrated Circuits for a WPAN System", Verlag Dr. Hut, Munich 2010, ISBN 978-3-86853-355-2).

The initially mentioned prior art communication item is permanently attached to the ear of the user. Although the speaker position in the ear canal by means of the ear-plug stabilizes the ear-piece and supports much of its weight, it is still inconvenient to carry this item on the ear all the time.

The object of the present invention is to provide a communication item in the form of a wireless audio headset with an ear-piece that can be used more comfortably over a long period of time.

Above mentioned object is met by a communication item comprising the features of the preamble of claim 1 together with the features of the characterizing part of claim 1.

For the purpose of this patent application a number of terms used are defined as follows:
A "jewelry item" includes true jewelry items as well as costume jewelry items and generally decorative items. In particular a jewelry item can be a pendant, a necklace, a choker, an ear-clip, an ear-ring, a brooch, a bracelet, a finger ring or the like.

A jewelry item has at least two "components", namely a mechanical carrier component and a decorative component. A decorative component itself can have one element or a number of elements (e.g. a chain of pearls having a large number of pearls).

A "communication module" is understood as a short-range wireless communication item. Preferably, however not exclusively, this term refers to a Bluetooth module. Other types use e.g. Wi-Fi or IR communication links or other standards (see the prior art mentioned above).

The communication module comprises a number of components, e.g. a core element with a chipset (electronic circuitry), a microphone (frequently, but not necessarily integrated in the core element and obviously not necessary where only audio functions for listening are used as in an MP-3 player or the like) and a speaker. Necessarily, the communication module comprises a battery pack, mostly rechargeable, which is frequently but not necessarily integrated into the core element. Necessarily the core element also comprises user interface elements.

A "wireless personal communication system" comprises at least one communication module and at least one "base unit" remote from the communication module, in particular, but not exclusively a mobile phone or a personal digital assistant. The base unit is connected to the communication module by a "short-range wireless communication link" (Bluetooth, Wi-Fi, IR etc.; WPAN-system). A short-range wireless communication link typically permits communication up to a distance of 10 to 20 m.

An "access point" on the housing isn't necessarily an opening. It may also be a closed area of the housing if a contactless operation of a functional element is provided for.

Now, according to the invention the ear-piece is placed on the base at the appropriate location on a users body or clothing if it is in a rest position and not in use. Then it is very convenient to carry and the ear of the user is not involved at all. Only in the use position the ear-piece is attached to the ear of the user.

This specific design of the communication item according to the invention shows a separation of the ear-piece from the base if the ear-piece is used. The ear-piece is connected to the base if it is not in use. As soon as the communication module is activated, e.g. if the music player is started or if a telephone call on the mobile phone is to be answered, the ear-piece is detached from the base and attached to the ear of the user (e.g. by means of a clip). Even there the ear-piece can have its second function as a decorative element. In general, however, the inventive concept can be realized also without a decorative component.

In a preferred embodiment of the invention the base together with the ear-piece in its rest position forms a brooch or the like. In that case it is preferred that the fastener is a clip, a clasp, a strap, a fixing pin, or a magnet fixture on the rear side of the base.

In order to be a complete decorative communication item also the base can be provided with a decorative component or designed as a decorative component itself.

A similar concept can be realized with a bracelet where a mechanical wristlet takes the position of the base of the brooch explained before.

In a specific design of such a communication item the base is a holding fixture of the bracelet, preferably on one element of a multi-element bracelet, and the fastener is the wristlet of the bracelet, preferably the group of the other elements of a multi-element bracelet. In this particular case it is preferred that the wristlet is provided with at least one decorative component, preferably a number of decorative components similar to the decorative component of the ear-piece.

In a further version of the inventive communication item the base together with the ear-piece can form a pendant on a chain, a necklace or a choker.

For positioning the speaker on the ear-piece reference can be made to the prior art documents mentioned above. In a preferred embodiment it is provided that the ear-piece comprises a mechanical fastener like a clip or a pin to secure the ear-piece to the pinna or the ear-lobe of a user's ear.

As far as the microphone of the communication module is concerned, the prior art mentioned above has also a number of examples. In a first version it is possible that a microphone of the communication module is integrated into or positioned on the ear-piece. In another version a microphone together with an energy supply is integrated into the base and/or the fastener of the mechanical carrier component and a short-range wireless communication link is provided for between the microphone in the mechanical carrier component and the core element in the ear-piece. Finally, it is possible that a microphone together with an energy supply is integrated into a separate component and a short-range wireless communication link is provided for between the microphone in the separate component and the core element in the ear-piece.

A further preferred embodiment of the invention provides that the base is provided with a battery charging station for the ear-piece. In particular preferably this is a contactless charging station.

In order to re-charge the base this component of the communication item may be provided with a power jack either directly for the charging station or for a battery pack in the base as the back up energy supply of the charging station.

Now, preferred embodiments of the invention are described with reference to the drawings. In the drawings
- Fig. 1: shows a first embodiment of the invention in the form of a brooch, Fig. 1a in the "communication off" state, Fig. 1b in the "communication on" state,
- Fig. 2: shows a second embodiment of the invention in form of a bracelet, Fig. 2a in the "communication off" state, Fig. 2b in the "communication on" state,
- Fig. 3: shows an enlarged perspective view of an ear-piece according to the invention,
- Fig. 4: shows the ear-piece of Fig. 3 in a side view,
- Fig. 5: shows the core element of the communication module,
- Fig. 6: shows the rear cover of the housing of the ear-piece.

The invention relates to a communication item in the form of a wireless audio headset with an ear-piece as explained in the introductory part of the description. The definitions in the introductory part of the description shall also apply throughout the following description of the preferred embodiments.

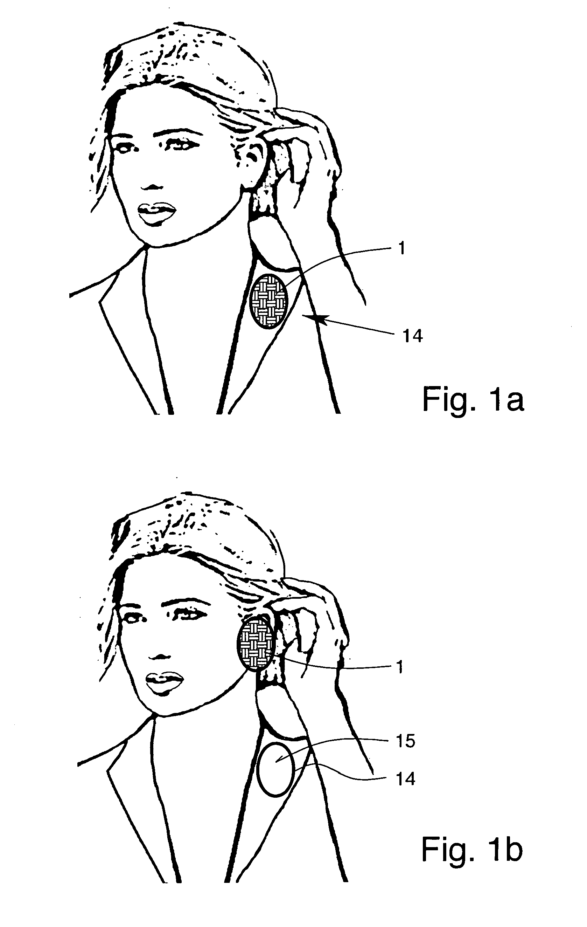

Fig. 1 shows a first preferred embodiment of a communication item according to the invention in the general form of a brooch.

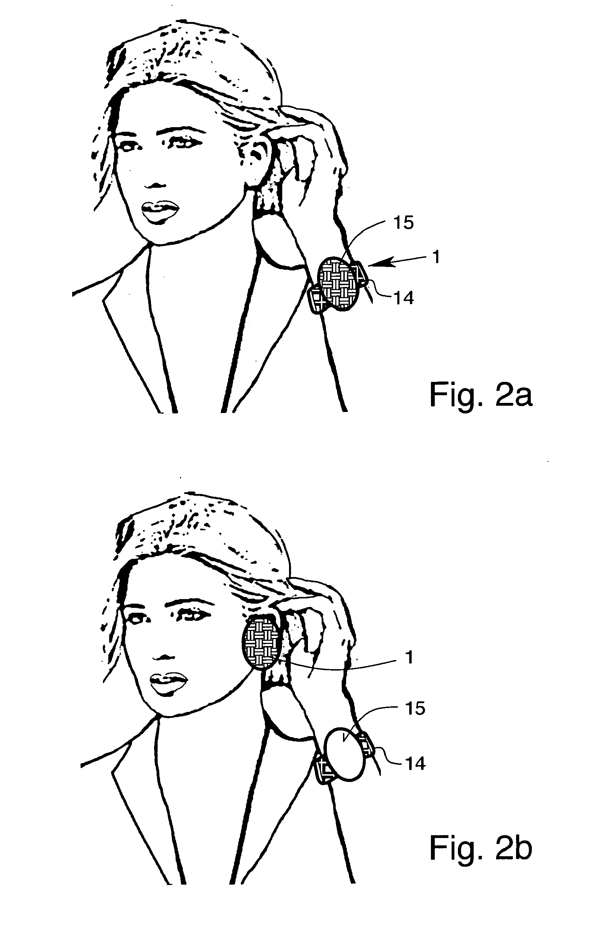

Fig. 2 shows a second embodiment of the communication item according to the invention, now in the form of a bracelet.

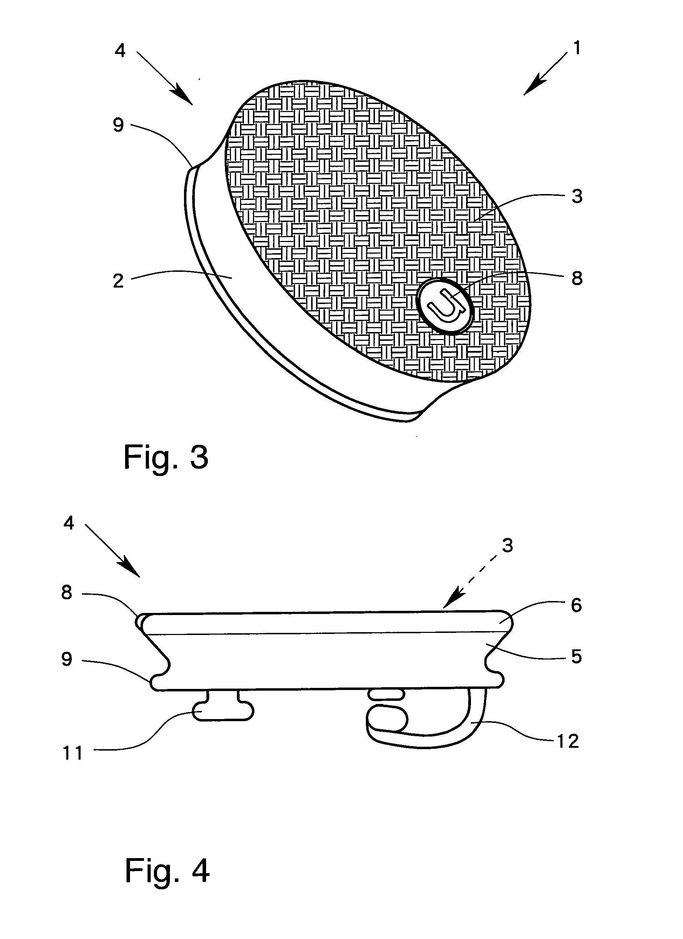

Fig. 3 to 6 show the details of the ear-piece according to a preferred embodiment of the invention, this ear-piece possibly used in the embodiment of Fig. 1 as well as in the embodiment of Fig. 2.

Fig. 3 to 6 show that the ear-piece 1 of this communication item has at least two components. There it at least one mechanical carrier component 2 and at least one decorative component 3 which is here formed directly on the housing 4 of the ear-piece 1. It is completely covering the front face of the housing 4. In another version of the invention the decorative component 3 may also be separate from the mechanical carrier component 2, but mechanically connected to the mechanical carrier component 2.

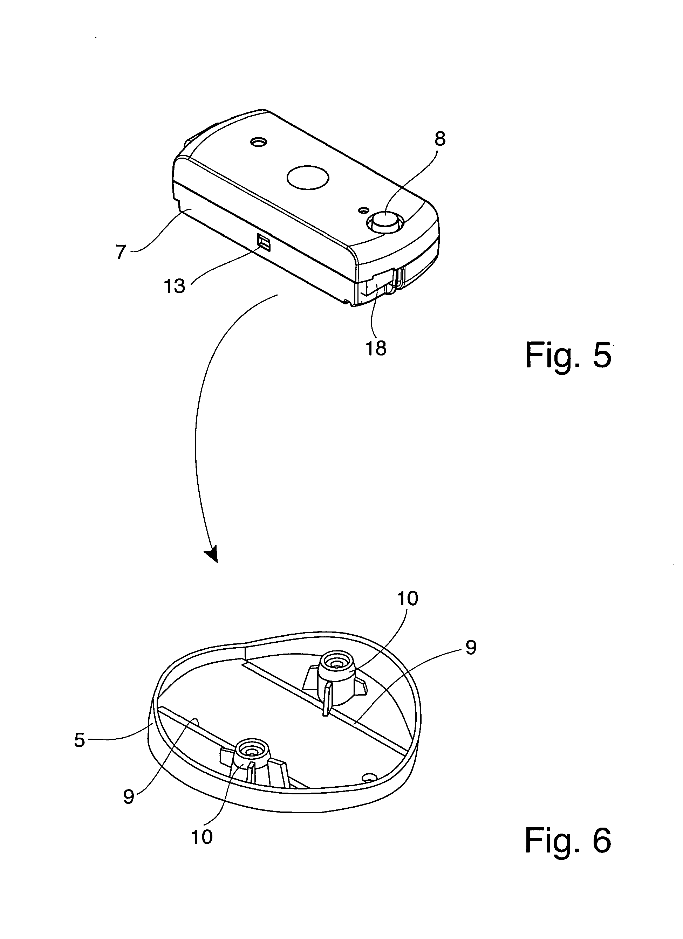

Fig. 4 shows in the sideline that the housing 4 comprises a rear cover 5 and a front cover 6 attached to the rear cover 5. In the housing 4 at least a core element 7 of the communication module is positioned. The arrow in Fig. 5 to Fig. 6 indicates where the core element 7 is seated in the rear cover 5.

In the introductory part of the description the core element 7 was defined. This core element 7 has a housing and in the housing a chip-set for the electronics of the communication module, in particular the wireless communication link established by the communication module. Such a core element 7 is a mass production standard item. A typical Bluetooth core element 7 will have a length of about 40 mm, a width of about 18 mm and a height of about 11 mm. Future Bluetooth core elements 7 will have smaller dimensions. The core element 7 is the "heart" of the communication module. In the preferred second version it establishes the short-range wireless communication link based on a typical standard like Bluetooth, Wi-Fi, IR or the like (see the prior art mentioned above). For components like antenna, receiver, transmitter etc. reference is made to the prior art mentioned above.

The housing 4 further has a number of access points to provide access to functional elements 8 of the core element 7. Those functional elements 8 are e.g. an on/off button or multi function button, a volume button, an indicator light and a power jack for recharging the battery in the core element 7.

Fig. 3 shows the access point for functional element 8 (on/off button) - here designed as a decorative part of the ear-piece 1 on the front cover 6.

Fig. 6 shows a perspective view of the rear cover 5. It is provided with fixation means 9 for positioning the core element 7 in the housing 4. The fixation means 9 here are forms, namely side rails, on the internal surface of the rear cover 5 of the housing 4. It can be seen that the housing of the core element 7 fits exactly between the fixation means 9. Similar fixation means may be provided on the internal surface of the front cover 6. Fig. 5 also shows bosses 10 on the rear cover 5 where mounting screws can be positioned to connect the front cover 6 to the rear cover 5.

Of course, an ear-piece 1 according to the invention needs a speaker 11. The speaker 11 is positioned on or in the ear-piece 1. Reference is again made to the prior art mentioned in the introductory part of the description.

In the present embodiment the speaker 11 forms a part of a small ear-plug that extends outwardly from the rear side of the rear cover 5 of the housing 4. This can be seen in Fig. 4 of the drawings. Also it can be seen that the ear-piece 1 comprises a mechanical fastener 12, here in the form of a spring biased clip, to secure the ear-piece 1 to the ear-lobe of a user's ear. Again reference is made to the prior art cited in the introductory part of the description which provides a number of alternative solutions for the fixation of the ear-piece 1 on the ear of a user.

In Fig. 5 of the drawings it can be seen that the core element 7 here has an electrical interface 13 for another electronic component of the communication module. Generally, this can be a microphone, a speaker, or else. In the present embodiment the speaker 11 is a part of the core element 7 and is provided on the underside of the core element 7 as shown in Fig. 5.

Fig. 6 shows the opening in the rear cover 5 that provides the sound connection to the ear of a user.

In the present invention a battery pack is integrated into the core element 7. However, it can also be separate from the core element 7 in the housing 4.

Now, in the first embodiment of the invention shown in Fig. 1a, 1b the communication item comprises a mechanical carrier component in the form of a base 14 with a fastener 15 which can be positioned at an appropriate location on a user's body or clothing. Fig. 3 and 4 show that the housing 4 of the ear-piece 1 is provided with a mechanical interface 16 that provides a detachable connection to the base 14. In the rest position of the ear-piece 1 which is shown in Fig. 1a the ear-piece 1 is connected to the base 14. This connection, however, is detachable. For use of the ear-piece 1 the ear-piece 1 can be detached from the base 14 and can be attached to the ear of the user. This can be seen in Fig. 1b.

In the present embodiment of the invention the mechanical interface 16 on the housing 4 of the ear-piece 1 is a snap on formation. The base 14 is a kind of ring and the housing 4 of the ear-piece 1 can be positioned in the ring by means of the snap fit. This is a simple and efficient construction.

However, other constructions are also possible, in particular constructions with a positive fit and lock means between base 14 and housing 4 of the ear-piece 1.

In Fig. 1 of the drawings the ear-piece 1 together with the base 12 forms a brooch to be positioned at an appropriate location on the clothing of the user, e.g. on the lap of the user's jacket. A similar, brooch-like construction can be used at other positions on the user's clothing, e.g. on a waste belt or suspenders.

In the present embodiment it is preferable that the fastener 15 is a clip, a clasp, a strap, a fixing pin, or a magnet fixture on the rear side of the base 14.

In general it is possible that not only the ear-piece 1 is provided with a decorative component 3 but also the base 14 is provided with such a decorative component, in particular a jewelry component, or is designed itself as a decorative component, e.g. as a base 14 of precious metal or plated therewith.

In the second embodiment of the invention shown in Fig. 2 the ear-piece 1 together with the base 14 forms a bracelet. In the specific embodiment it is provided that the base 12 is a holding fixture of the bracelet, preferably on one element of a multi-element bracelet, and the fastener 13 is the wristlet of the bracelet, preferably the group of the other elements of a multi-element bracelet.

In Fig. 2a it can be seen that in the present embodiment the wristlet which is the fastener 15 of the base 14, has a number of further decorative components 17 that form the other links of the multi-element bracelet. They look similar as the decorative component 3 of the ear-piece 1.

A third embodiment of the invention that is not disclosed here but that can be understood easily it can be provided that the base and the ear-piece together can form a kind of pendant to be used on a necklace, a chain, a choker or the like, or a ring to be worn on a finger of a user. For these versions reference is made to the parallel patent applications filed simultaneously with the present application and listed at the end of the present description.

Generally, for all embodiments of the invention, in the "communication-off" state the ear-piece 1 is safely positioned on the base 14. In the "communication-on" state, however, the bearer will detach the ear-piece 1 from the base 14. The user will now wear the ear-piece 1 like an ear-clip or the like as a classical wireless audio headset. Having finished the communication over the wireless communication link the ear-piece 1 can be returned to the base 14. This is pretty comfortable for the user.

There are possible versions for the position of a microphone of the communication module. In a first embodiment it can be integrated into or positioned on the ear-piece 1 similar to the prior art mentioned above. In a different embodiment the microphone, together with an energy supply may be integrated into the base 14 and/or the fastener 15 of the mechanical carrier component and a short-range wireless communication link would be provided for between the microphone and the core element 7 in the ear-piece 1.

A third possibility is to place the microphone completely separately from the ear-piece 1 and the base 14.

The base 14 further may be equipped with a battery charging station for the ear-piece 1. This may be a contact-related charging station or, preferably, a contactless charging station. As soon as the ear-piece 1 is placed on the base 14 charging of the battery pack of the ear-piece 1 begins. So the ear-piece 1 is always fully charged. The battery size of a charging station in the base 14 may be much greater than the size of a battery pack in the ear-piece 1.

It is preferably, however, that the base 14 is provided with a power jack to re-charge the station in the base 14. In a different approach the power jack may be connected directly to the charging station without an additional battery pack in the base 14. Then there is no automatic re-charging of the ear-piece 1 on replacement of the ear-piece 1 into the base 14. Then a separate charging operation would have to be performed.

The present patent application is one of the following related applications:
- EP .......... "System of jewelry items"
   Attorney-reference; 09.0478.2
- EP .......... "Hand wearable controller for a remotely located electronic device"
   Attorney-reference: 10.0019.2
- EP .......... "Communication item"
   Attorney-reference: 10.0020.2
- EP .......... "Communication item as a pendant on a choker" Attorney-reference: 10.0084.2
- EP .......... "Communication item as a pendant on a necklace" Attorney-reference 10.0085.2
- EP .......... "Wireless audio headset with an ear-piece" Attorney reference 10.0086.2

## Claims

1. Communication item in the form of a wireless audio headset with an ear-piece (1),
wherein a communication module is integrated into the communication item, wherein the communication module comprises at least a core element (7) and a speaker (11),
wherein the ear-piece (1) comprises a housing (4) with at least the core element (7) of the communication module positioned in the housing (4) and with the speaker (11) positioned on or in the ear-piece (1),
wherein the ear-piece (1) preferably comprises a mechanical fastener (12) like a clip or a pin to secure the ear-piece (1) to the pinna or the ear-lope of a user's ear,
wherein, preferably, the ear-piece (1) further comprises at least one decorative component (3) which is separate from, but mechanically connected to a front side of the housing (4) or is formed directly on the housing (4),
**characterized in that**,
the communication item further comprises a mechanical carrier component in the form of a base (14) with a fastener (15) which can be positioned at an appropriate location on a user's body or clothing,
the housing (4) is provided with a mechanical interface (16) that provides a detachable connection to the base (14),
in a rest position of the ear-piece (1) the ear-piece (1) is detachably connected to the base (14) and
in a use position the ear-piece (1) is detached from the base (14) and attached to the ear of the user.

2. Communication item according to claim 1, **characterized in that** in the rest position the ear-piece (1) together with the base (14) forms a brooch or the like.

3. Communication item according to claim 2, **characterized in that** the fastener (15) is a clip, a clasp, a strap, a fixing pin, or a magnet fixture on the rear side of the base (14).

4. Communication item according to any one of the preceding claims, **characterized in that**
the base (14) is also provided with a decorative component.

5. Communication item according to claim 1, **characterized in that** in the rest position the ear-piece (1) together with the base (14) forms a bracelet.

6. Communication item according to claim 5, **characterized in that** the base (14) is a holding fixture of the bracelet, preferably on one element of a multi-element bracelet, and the fastener (15) is the wristlet of the bracelet, preferably provided by the other elements of a multi-element bracelet.

7. Communication item according to claim 6, **characterized in that** the wristlet is provided with at least one decorative component (17), preferably a number of decorative components (17) similar to the decorative component (3) of the ear-piece (1).

8. Communication item according to claim 1 or 4, **characterized in that** in the rest position the ear-piece (1) together with the base (14) forms a pendant to be carried on a chain, a necklace, a choker or the like, or a ring to be worn on a finger of a user.

9. Communication item according to any one of the preceding claims, **characterized in that**
the speaker (11) forms a part of an ear-plug that extends outwardly from the rear side of the housing (4) of the ear-piece (1).

10. Communication item according to any one of the preceding claims, **characterized in that**
a microphone of the communication module is integrated into or positioned on the ear-piece (1).

11. Communication item according to any one of the claims 1 to 9, **characterized in that**
a microphone together with an energy supply is integrated into the base (14) and/or the fastener (15) of the mechanical carrier component and a short-range wireless communication link is provided for between the microphone in the mechanical carrier component and the core element (7) in the ear-piece (1).

12. Communication item according to any one of the claims 1 to 9, **characterized in that**
a microphone together with an energy supply is integrated into a separate component and a short-range wireless communication link is provided for between the microphone in the separate component and the core element (7) in the ear-piece (1).

13. Communication item according to any one of the preceding claims, **characterized in that**
the base (12) is provided with a battery charging station for the ear-piece (1).

14. Communication item according to claim 13, **characterized in that** the base (12) is provided with a contactless charging station.

15. Communication item according claim 13 or 14, **characterized in that** the base (12) is provided with a power jack either directly for the charging station or for a battery pack of the charging station.
